# EUROPÄISCHE PATENTSCHRIFT

(11) **EP 3 484 719 B1**
(45) Veröffentlichungstag und Bekanntmachung des Hinweises auf die Patenterteilung: **26.08.2020**
(21) Anmeldenummer: 17736661.4
(22) Anmeldetag: 06.07.2017
(51) Int. Cl.: B60B 33/00, B60B 33/02

(54) **LENKROLLE MIT EINEM LAUFRAD**
CASTER COMPRISING A RUNNING WHEEL
GALET DE DIRECTION MUNI D'UNE ROUE DIRECTRICE

(30) Priorität: 15.07.2016 DE 102016113069
(43) Veröffentlichungstag der Anmeldung: 22.05.2019
(73) Patentinhaber: Tente GmbH & Co. KG, 42929 Wermelskirchen (DE)
(72) Erfinder: HARTKOPF, Horst, 51381 Leverkusen (DE)
(74) Vertreter: Müller, Enno
(86) Internationale Anmeldenummer: PCT/EP2017/066861
(87) Internationale Veröffentlichungsnummer: WO 2018/011043

(56) Entgegenhaltungen:
- DE-A1-102004 035 220
- DE-U1-202010 015 321
- DE-U1-202012 100 345
- US-A1- 2015 210 114

## Beschreibung

### Gebiet der Technik

Die Erfindung betrifft eine Lenkrolle nach den Merkmalen des Oberbegriffes des Anspruches 1.

### Stand der Technik

Lenkrollen der in Rede stehenden Art sind bekannt. Diese finden bspw. Verwendung an Krankenhausbetten, Transportgeräten o. dgl. Diese Lenkrollen besitzen in üblicher Weise einen in der Nutzungsstellung vertikal abragenden Montagezapfen, über welchen die Lenkrolle an das Krankenhausbett o. dgl. festlegbar ist.

Bekannt ist in diesem Zusammenhang die Anordnung einer Bremseinrichtung in der Lenkrolle, welche Bremseinrichtung über einen quer oder längs in dem Montagezapfen angeordneten Schalthebel, bspw. durch Fußbetätigung einer Bedienperson, in Richtung des Laufrades der Lenkrolle verlagerbar ist, um so das Laufrad zu blockieren. Auch sind Lenkrollen bekannt, welche im Gabelinneren Konstruktionselemente aufweisen, mittels welcher die Lenkrolle auch als Bockrolle eingestellt werden kann.

So ist weiter eine solche Lenkrolle bspw. aus der DE 10 2004 035 220 A1 bekannt. Diese weist einen Stößel auf, der funktionsmäßig sowohl im Stößelabwärtshub als auch im Stößelaufwärtshub genutzt wird. Im Stößelabwärtshub wird in dieser bekannten Lösung eine Totalfeststellung erreicht, also eine Bremsstellung kombiniert mit einer Schwenkfestlegung. Über den Stößelaufwärtshub ist die Lenkrolle einstellbar als schwenkgehinderte Bockrolle.

Auch ist aus der vorgenannten Patentanmeldung ein reibschlüssig auf das Laufrad, insbesondere auf die Laufradfläche, wirkendes Bremsteil bekannt, das über den Schaltnocken in die Bremsstellung verlagerbar ist.

Aus der US 2015/0210114 A1 ist eine Lenkrolle mit zwei Stößeln bekannt, wobei der zur Richtungsfeststellung genutzte Stößel bei üblicher Nutzungsstellung horizontal verläuft. Während der erste Stößel durch einen Keiltrieb zu betätigen ist, ist der zweite Stößel gegen Federkraft über einen Fußhebel betätigbar.

Aus der DE 20 2010 015 321 U1 ist eine Lenkrolle bekannt, bei welcher eine Formschluss-Bremsfeststellung vorgesehen ist.

### Zusammenfassung der Erfindung

Ausgehend von dem dargelegten Stand der Technik stellt sich der Erfindung die Aufgabe, eine Lenkrolle mit einem über einen Schaltnocken betätigbaren Stößel anzugeben, die vorteilhaft aufgebaut ist.

Diese Aufgabe ist beim Gegenstand des Anspruches 1 gelöst, wobei darauf abgestellt ist, dass die Stößel bei einer üblichen Benutzungsstellung der Lenkrolle quer zu einer Vertikalrichtung nebeneinander angeordnet sind und sich nebeneinander in Vertikalrichtung erstrecken und dass der Schaltnocken zwei Nockenflächen aufweist, die jeweils einem der Stößel zugeordnet sind, dass die Nockenflächen unterschiedlich zueinander ausgebildet sind.

Zufolge der vorgeschlagenen Ausgestaltung sind im Vergleich zu bekannten Lösungen mit nur einem Stößel geringere Schaltkräfte zur Erreichung einer Bremswirkung, wie auch zur Erreichung einer Richtungsfeststellung ohne Bremswirkung gegeben. Zur Erlangung der einen oder anderen Wirkstellung ist bevorzugt nur einer der Stößel mit dessen Einwirkungsabschnitten zu verlagern, während in bevorzugter Ausgestaltung der andere Stößel mit den anderen Einwirkungsabschnitten im Zuge dieser Verlagerung keinen oder zumindest keinen die Schaltkräfte erhöhenden Verlagerungsweg mitvollzieht.

So kann, wie auch bevorzugt, zur Erlangung einer Bremseinwirkung auf das Laufrad allein nur der Stößel verlagert werden, der die entsprechende Bremseinrichtung zur Einwirkung auf das Laufrad beaufschlagt oder trägt. Im umgekehrten Fall zur Erlangung einer Richtungsfeststellung kann, wie auch hier bevorzugt, allein nur der Stößel verlagert werden, der auf die entsprechenden Einrichtungsteile einwirkt bzw. die entsprechenden Feststellungsabschnitte trägt.

Die zwei Stößel sind über einen Schaltnocken betätigt. Die Linearverlagerung eines jeden Stößels in eine Richtung kann, wie auch bevorzugt, entgegen der Kraft einer Rückstellfeder erreicht werden.

Die Stößel sind bei einer üblichen Benutzungsstellung der Lenkrolle quer zu einer Vertikalrichtung nebeneinander angeordnet und erstrecken sich nebeneinander in der Vertikalrichtung. Die Stößel können in bekannter Weise wie auch die Anordnung nur eines Stößels innerhalb der Gabel verlaufen, bevorzugt ausgerichtet entlang einer im Nutzungszustand vertikalen Schwenkachse der Lenkrolle.

Auch können die Stößel in einer Ebene quer zu der Vertikalrichtung an sich in dem Querschnitt in einer Linie abbildenden Flächen aneinander liegen. Diese quer zur Vertikalrichtung gerichtete Anlagelinie kann gekreuzt sein von einer geometrischen Schwenkachse der Lenkrolle.

In einer Ausgestaltung weist der Schaltnocken zwei Nockenflächen auf, die jeweils einem der Stößel zugeordnet sind. Die Nockenflächen sind unterschiedlich zueinander ausgebildet, so dass eine Drehung des Schaltnockens über die unterschiedlichen Nockenflächen zu unterschiedlichen Verlagerungswegen der Stößel führt. Das Maß des Stößel-Verlagerungsweges kann über einen Umfangsbereich der zugeordneten Nockenfläche auch gleich Null sein.

Der Schaltnocken kann, wie auch bevorzugt, um eine quer zur Vertikalrichtung der Lenkrolle gerichtete geometrische Achse drehbar sein. Die auf die Stößel wirkenden Nockenflächen weisen mit Bezug auf einen Grundriss, in welchem sich die Drehachse als Punkt abbildet, umfangsmäßig kurvenabschnittförmige Steuerabschnitte auf, mit sich über den Umfang verändernden Radien.

Der Schaltnocken kann auf einen oder beide Stößel mittels eines Wälzlagers einwirken. Die Anordnung eines Wälzlagers kann zur weiteren Reduzierung der Schaltkräfte führen.

In bevorzugter Ausgestaltung ist ein oder sind beide Wälzlager an einem oder je einem der Stößel gelagert. So kann an jedem Stößel ein solches Wälzlager drehbar angeordnet sein, bevorzugt drehbar angeordnet um eine parallel zur Drehachse des Schaltnockens verlaufende Achse.

In weiterer, wie auch bevorzugter Ausgestaltung kann der Schaltnocken zweiteilig ausgebildet sein, mit einem ersten und einem zweiten Teilnocken. Je ein Teilnocken ist einem Stößel zugeordnet. Die beiden Teilnocken weisen Nockenflächen auf, die unterschiedlich zueinander ausgebildet sind.

Die beiden Teilnocken können scheibenartig, weiter bspw. kreisringscheibenartig ausgebildet sein.

Auch kann der erste Teilnocken den zweiten Teilnocken in einer Richtung quer zu der Vertikalrichtung durchsetzen. So kann der zweite Teilnocken relativ drehbar an dem ersten Teilnocken gehaltert sein. Die Durchsetzungsrichtung ist bevorzugt orientiert an der Erstreckungsrichtung der Schaltnocken-Drehachse.

Der Schaltnocken kann von einem Schalthebel durchsetzt sein. Ein solcher Schalthebel kann zur Betätigung durch den Benutzer freiliegen, wobei eine solche Betätigung über den Schalthebel, wie bevorzugt, eine Drehverlagerung des Schaltnockens sein kann.

Der Schalthebel ist bei den bekannten Lösungen mit Bezug auf die Drehrichtung um die Drehachse des Schaltnockens drehfest mit dem Schaltnocken verbunden, bspw. zufolge einer entsprechenden Formschluss-Zusammenwirkung. Bei Ausbildung von zwei Teilnocken wirkt der Schalthebel in einer möglichen Ausgestaltung nur auf einen der Teilnocken unmittelbar ein. Auf den weiteren (zweiten) Teilnocken kann der Schalthebel mittelbar einwirken, dies über den anderen (ersten) Teilnocken, mit welchem der Schalthebel beispielsweise formschlüssig verbunden sein kann.

In weiterer Ausgestaltung kann der erste Teilnocken relativ zu dem zweiten Teilnocken um eine Drehachse, um welche der Schaltnocken bei Betätigung zu drehen ist, drehbar sein. Die Drehung des einen Teilnockens relativ zu
(weiter auf Seite 7, oben der WO 2018/011043 A1 mit handschriftlich geänderten Seiten 23 bis 26)
dem anderen Teilnocken kann, wie auch bevorzugt, bezüglich des Drehverlagerungsweges begrenzt sein.

Auch kann einer der Stößel mit einem Bremsteil zusammenwirken, wobei das Bremsteil bevorzugt aus einem ersten Reibschluss-Bremsteil und einem zweiten Formschluss-Bremsteil besteht. Das Bremsteil bzw. die beiden Einzel-Bremsteile können unmittelbar an dem zugeordneten Stößel befestigt und somit zusammen mit diesem verlagerbar sein. In einer alternativen Ausgestaltung kann das Bremsteil bzw. können die Einzel-Bremsteile gesondert vorgesehen und in der Gabel gehaltert sein, zur Beaufschlagung und ggf. zum Mitschleppen in Verlagerungsrichtung des Stößels durch diesen Stößel.

Auch können das Reibschluss-Bremsteil und das Formschluss-Bremsteil zugleich und ggf. über denselben Verlagerungsweg über den Stößel mitgeschleppt werden. Möglich ist diesbezüglich auch, dass eines der Bremsteile bei Stößelbeaufschlagung einen größeren Verlagerungsweg bis in die Bremsstellung zurücklegt als das andere Bremsteil.

Zur Formschlussfeststellung des Laufrades kann dieses einen Zahnkranz aufweisen, der bevorzugt zur Zusammenwirkung mit dem zweiten Formschluss-Bremsteil ausgebildet ist. Ein solcher Zahnkranz erstreckt sich bevorzugt konzentrisch zur Laufrad-Drehachse, kann darüber hinaus im Bereich einer Laufrad-Felge ausgebildet sein. Bevorzugt sind zwei Zahnkränze beidseitig einer Laufradnabe vorgesehen.

Das Formschluss-Bremsteil weist im Falle eines vorgesehenen Zahnkranzes eine entsprechend angepasste Gegenverzahnung auf. Die Formschluss-Bremsstellung ist erreicht, wenn die Zähne des Formschluss-Bremsteils in die Zahnlücken des laufradseitigen Zahnkranzes und umgekehrt eingreifen.

Auch können die Formschlussmittel des zweiten Bremsteils an einem bevorzugt mit dem ersten Bremsteil zwar fest verbundenen aber elastisch dazu bewegbaren Teil befestigt sein. Die Formschlussmittel vollziehen entsprechend bevorzugt denselben Verlagerungsweg in Vertikalrichtung, wie das oder die Reibschlussmittel des ersten Bremsteils. Die elastische Anbindung an dem ersten Bremsteil bietet die Möglichkeit einer (begrenzten) Relativbewegung des einen Bremsteils zu dem anderen Bremsteil, bspw. in dem Fall, dass das Laufrad in Laufrichtung betrachtet eine Stellung einnimmt, in welcher die Zähne des Formschlussmittels auf die Zähne des laufradseitigen Zahnkranzes treten und somit ein Ineinandergreifen der Zähne zur Bildung der Formschlussstellung verhindert wird. Die Bremseinrichtung kann auch in einer solchen Situation als Einheit in ihre Brems-Endstellung verlagert werden. Das die Formschlussmittel tragende Teil gibt elastisch nach.

In einer solchen Stellung kann zunächst das Laufrad allein durch das Reibschluss-Bremsteil gebremst sein. Eine geringfügige Verlagerung der Laufrolle in Laufrichtung - wobei in der Praxis bereits ein leichtes Ruckeln ausreichend ist - führt zu einer selbsttätigen Verlagerung der Formschlussmittel in die Formschlussstellung zufolge der federartig wirkenden Rückstellkraft des elastisch zu dem ersten Bremsteil bewegbaren zweiten Bremsteils.

Das zweite Bremsteil kann an einem in Umfangsrichtung des Laufrades von dem ersten Bremsteil vorkragenden Arm ausgebildet sein. Ein solcher Arm erstreckt sich im Wesentlichen bevorzugt dem Kurvenverlauf des zugeordneten Zahnkranzes folgend, hierbei bevorzugt über eine freikragende Länge, die einem Zwanzigstel bis einem Fünftel, weiter etwa einem Zehntel der Umfangslänge des Zahnkranzes entspricht. Die Länge des Zahnkranzes in Umfangsrichtung ist hierbei definiert durch die Länge einer Kreislinie, die in einem Grundriss des Zahnkranzes, in welchem sich die Drehachse des Laufrades als Punkt abbildet, die Zahnspitzen des Zahnkranzes verbindet.

### Kurze Beschreibung der Zeichnungen

Nachstehend ist die Erfindung anhand der beigefügten Zeichnung, welche lediglich ein Ausführungsbeispiel darstellt, näher erläutert. Es zeigt:
- Fig. 1: eine Lenkrolle in perspektivischer Darstellung;

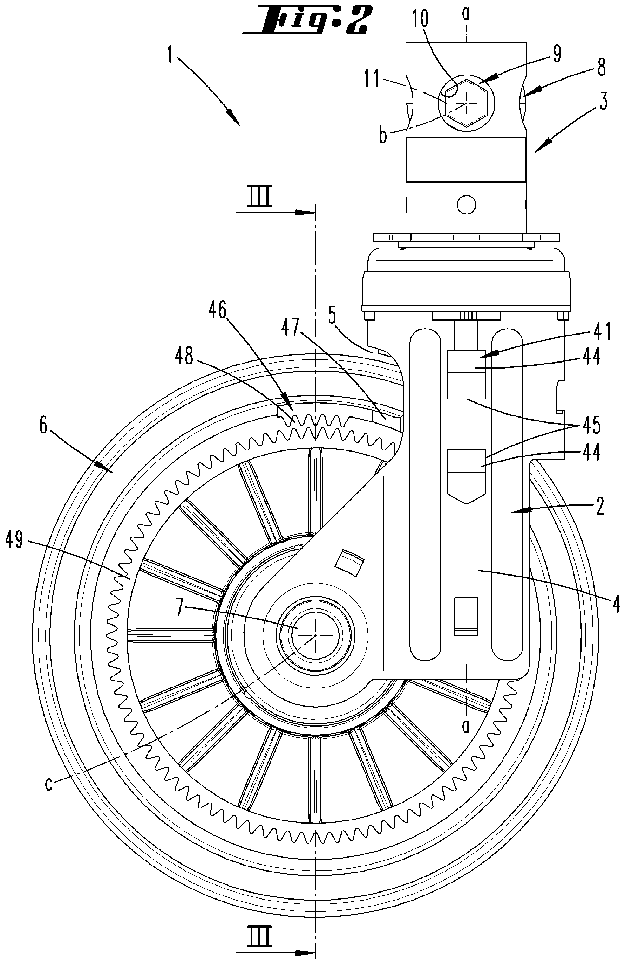

- Fig. 2: die Lenkrolle in Seitenansicht;

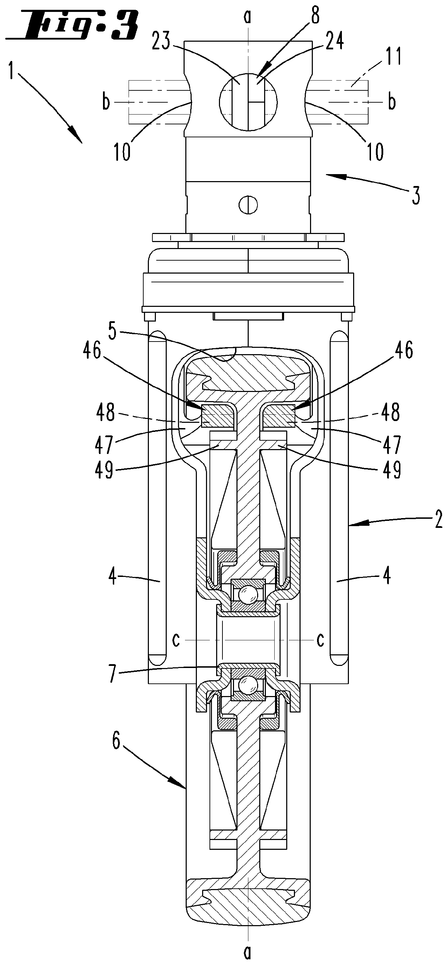

- Fig. 3: den Schnitt gemäß der Linie III-III in Figur 2;

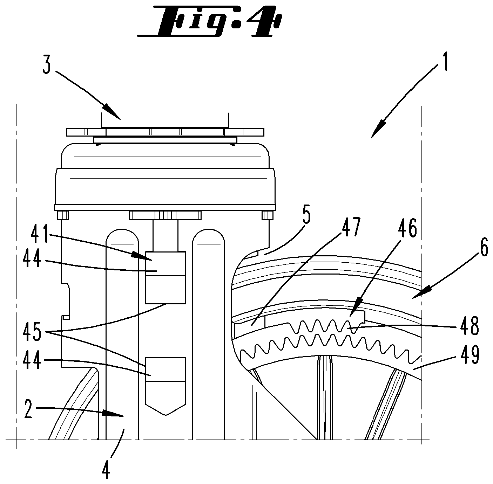

- Fig. 4: eine Ausschnittdarstellung eines Bereiches zur Formschlussfeststellung des Laufrades betreffend;
- Fig. 5: den Schnitt gemäß der Linie V-V in Figur 1, betreffend eine Freilaufstellung der Lenkrolle;
- Fig. 6: eine partiell aufgebrochen dargestellte Detailperspektive, betreffend die Freilaufstellung gemäß Figur 5;
- Fig. 7: die Stellung einer Schaltnockenanordnung sowie einer Stößelanordnung mit Brems- und Richtungsfeststellteilen, betreffend die Freilaufstellung;
- Fig. 7a: den Schnitt gemäß der Ebene VIIa in Figur 5;
- Fig. 8: die Rückansicht zu Figur 7 in perspektivischer Detaildarstellung;
- Fig. 9: den Schnitt gemäß der Linie IX-IX in Figur 5;
- Fig. 10: eine der Figur 5 entsprechende Darstellung, jedoch betreffend eine Richtungsfeststellung ohne Bremseinwirkung (Bockrollenstellung);
- Fig. 11: den Schnitt gemäß der Linie XI-XI in Figur 10;
- Fig. 12: eine weitere der Figur 5 entsprechende Darstellung, betreffend eine Totalfeststellung der Lenkrolle;
- Fig. 13: den Schnitt gemäß der Linie XIII-XIII in Figur 12.

### Beschreibung der Ausführungsformen

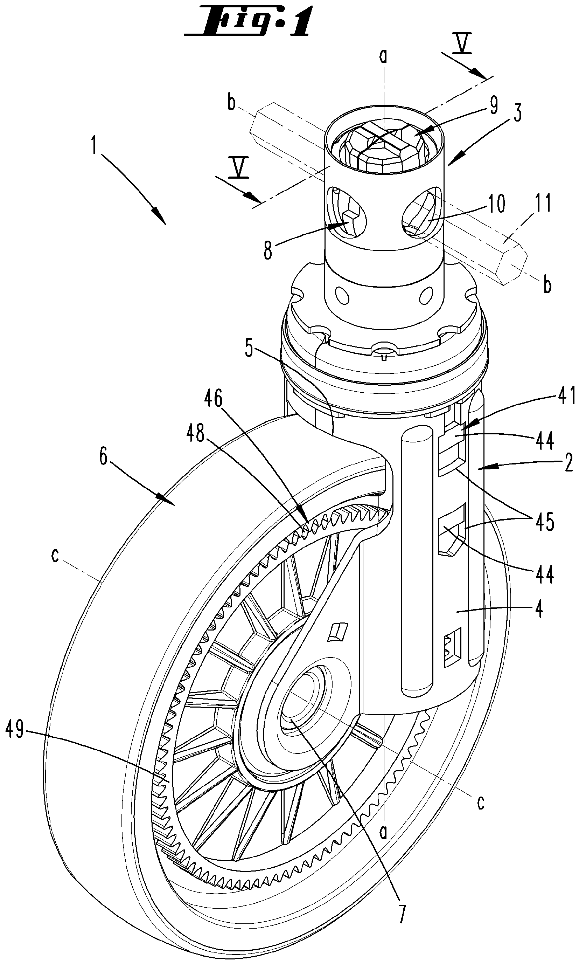

Dargestellt und beschrieben ist zunächst mit Bezug zu Figur 1 eine Lenkrolle 1 mit einer Gabel 2, von welcher ein zylinderförmig ausgestalteter Montagezapfen 3, eine Schwenkachse a umgebend, vertikal abragt.

Die Gabel 2 flankiert mit ihren bevorzugt deckungsgleich gegenüberliegend angeordneten Gabelschenkeln 4 ein in einer Gabelhöhlung 5 gelagertes Laufrad 6. Zur Lagerung des Laufrades 6 dient eine Hohlachse 7, welche das Laufrad 6 zentrisch durchsetzt und jeweils endseitig an den Gabelschenkeln 4 gehaltert ist. Die Radachse c verläuft quergerichtet zur Schwenkachse a.

Die dargestellte Lenkrolle 1 kann bspw. an einem Krankenhausbett o. dgl. positioniert sein. Die Festlegung erfolgt dann in üblicher Weise und ist hier deshalb nicht näher beschrieben.

In dem Montagezapfen 3 ist ein um eine Betätigungsachse b schwenkbeweglich angeordneter Schaltnocken 8 vorgesehen. Hierbei verläuft die Betätigungsachse b im dargestellten Ausführungsbeispiel rechtwinklig und entsprechend quergerichtet zu der Schwenkachse a der Lenkrolle 1, so bei üblicher Handhabung und Nutzung der Lenkrolle 1 entsprechend in einer Horizontalebene.

Die Fixierung des Schaltnockens 8 innerhalb des Montagezapfens 3 erfolgt in bekannter Weise über eine um die Schwenkachse a ausgerichtete Befestigungshülse 9.

Zur Drehmitnahme des Schaltnockens 8 besitzt dieser eine zentrisch angeordnete unrunde Kupplungsöffnung 10, welche von einem Schaft eines Schalthebels 11 durchsetzt ist. Dessen Querschnitt ist zur Bildung eines Formschlusses dem Querschnitt der Kupplungsöffnung 10 angepasst (hier bevorzugt Sechskant-Querschnitt).

Bezogen auf die Darstellungen sind unterhalb des Schaltnockens 8 zwei Stößel 12 und 13 vorgesehen. Diese sind in Vertikalrichtung ausgerichtet in dem Montagezapfen 3 in Ausrichtung der Schwenkachse a verlagerbar. Der Montagezapfen 3 besitzt einen um die Schwenkachse a ausgerichteten durchmesserreduzierten Stößelgang 14, wobei der Querschnitt des Stößelganges 14 dem zusammengefassten Querschnitt der Stößel 12 und 13 angepasst ist. Die Grundkontur des zusammengefassten Querschnitts der Stößel 12 und 13 bzw. des Stößelganges 14 ist etwa rechteckförmig. Hierdurch sind die Stößel 12 und 13 innerhalb des Montagezapfens 3 drehgesichert.

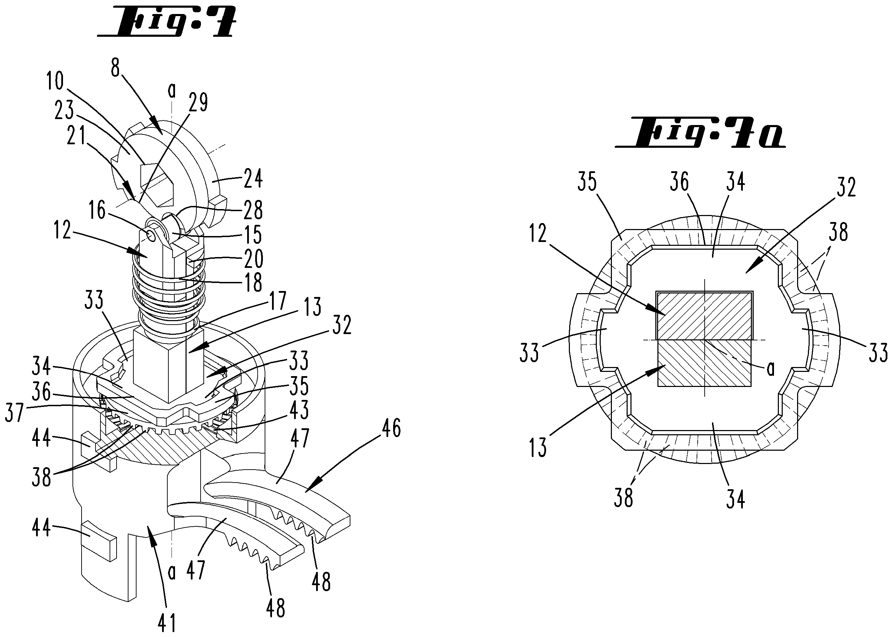

Die Stößel 12 und 13 sind bei einer üblichen Benutzungsstellung der Lenkrolle 1, entsprechend bei bevorzugter vertikaler Ausrichtung des Montagezapfens 3, quer zu der Vertikalrichtung nebeneinander angeordnet. Mit den aufeinander zu weisenden Flächen liegen die Stößel 12 und 13 bevorzugt zumindest annähernd, d.h. zu mehr als 50% der Fläche, vollflächig aneinander. Die aneinander liegenden Flächen der Stößel 12 und 13 bilden sich in einem Querschnitt quer zu der Vertikalrichtung bzw. quer zu der Schwenkachse a in einer Linie ab (vgl. Figur 7a).

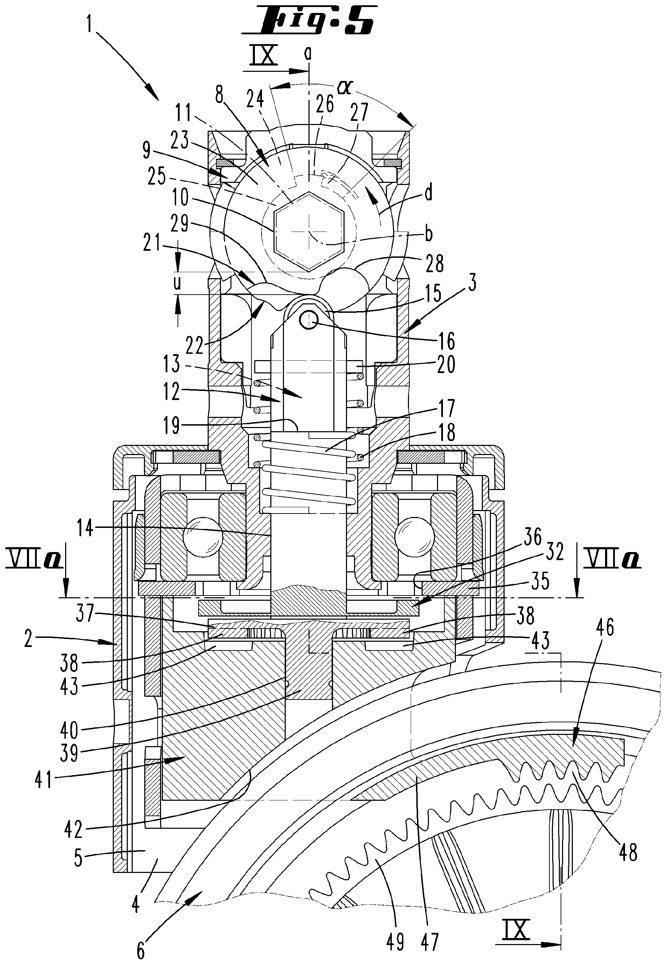

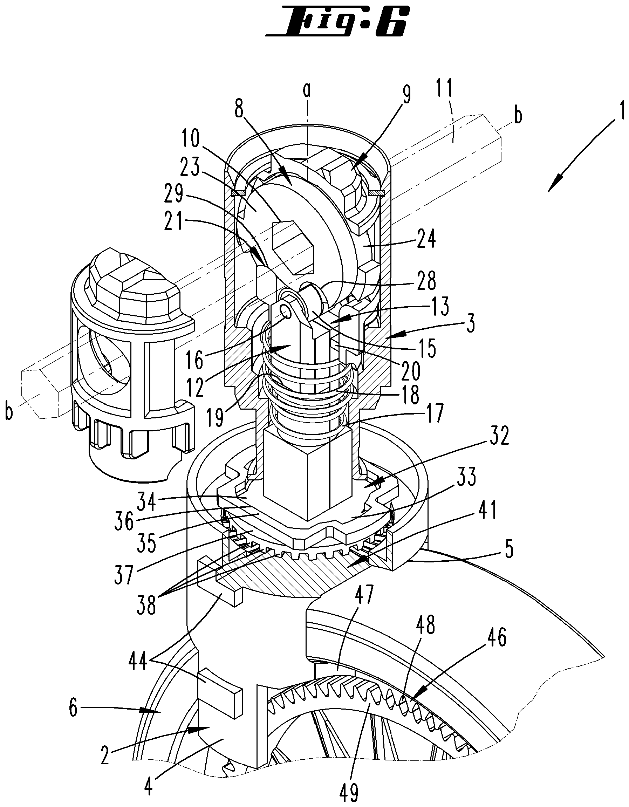

Wie bspw. in den Darstellungen der Figuren 5 bis 8 zu erkennen, ist das zwischen der Öffnung des Stößelganges 14 und dem Schaltnocken 8 jeweils angeordnete freie Ende eines jeden Stößels 12, 13 mit einem Wälzlager 15 versehen.

Die Wälzlager 15 sind an dem zugeordneten Stößel 12 bzw. 13 im Bereich eines in Vertikalrichtung frei abragenden Stößelabschnitts gehaltert, welcher Stößelabschnitt mit Bezug auf einen Querschnitt gemäß Figur 7a auf der der Aneinanderlage der beiden Stößel 12 und 13 abgewandten Breitseitenfläche des Stößels ausgebildet ist.

Es ist ein mit dem Innenring des Wälzlagers 15 drehfest verbundener Zapfen 16 vorgesehen, der in dem vorbeschriebenen frei abkragenden Abschnitt des Stößels gehaltert ist. Die sich hierbei ergebende geometrische Drehachse des Wälzlagers 14 erstreckt sich quergerichtet zur Schwenkachse a, weiter bevorzugt parallel ausgerichtet zu der Betätigungsachse b.

Der Schaltnocken 8 wirkt über den Außenring des Wälzlagers 15 auf den Stößel 12 bzw. 13 ein.

Im Bereich oberhalb des Stößelganges 14 sind die Stößel 12 und 13 umfasst von Rückstellfedern 17 und 18. Diese sind in dem dargestellten Ausführungsbeispiel als Zylinder-Druckfedern ausgebildet.

Je einer Rückstellfeder 17 bzw. 18 ist ein Stößel 12 bzw. 13 zugeordnet.

Die beiden Rückstellfedern 17 und 18 erstrecken sich in konzentrischer Ausrichtung zu der Schwenkachse a, wobei die Rückstellfeder 17 einen gegenüber der Rückstellfeder 18 geringeren Durchmesser aufweist und bevorzugt sich zumindest partiell innerhalb der Rückstellfeder 18 erstreckt.

Die beiden Rückstellfedern 17 und 18 stützen sich im Bereich ihres vertikal unteren Endes auf einer den Stößelgang 14 umgebenden Fläche (Rückstellfeder 17) und an einer in Vertikalrichtung hierzu nach oben versetzten radial erweiterten Stufenfläche der Befestigungshülse 9 ab (Rückstellfeder 18).

Die Rückstellfeder 17 kann mit ihrem vertikal oberen Ende gegen eine ausgebildete Ringschulter 19 des Stößels 12 wirken. Zur federnden Beaufschlagung des Stößels 18 in eine Richtung nach vertikal oben kann an dem Stößel 18 ein sich nach radial außen erstreckender Kragen 20 angeformt sein, gegen welchen sich unterseitig die Rückstellfeder 18 abstützt.

Die Rückstellfedern 17 und 18 sind bevorzugt (auch) in einer Grundstellung (Freilaufstellung) unter Vorspannung. Die Stößel 12 und 13 sind entsprechend tendenziell nach vertikal oben stets belastet. Entsprechend liegen die Wälzlager 15 bzw. deren Außenringe an der Umfangsfläche des Schaltnockens 8 an.

Die beiden Stößel 12 und 13 sind unabhängig voneinander in Erstreckungsrichtung der Schwenkachse a bzw. in Vertikalrichtung verlagerbar. Die entsprechende Verlagerung erfolgt zufolge einer steuernden Beaufschlagung der Stößel 12 bzw. 13 über die Umfangsfläche des Schaltnockens 8 unter Nutzung der Wälzlager 15.

Die Umfangsfläche des Schaltnockens kann in Richtung der Betätigungsachse b betrachtet nebeneinander liegende, zueinander unterschiedlich ausgebildete Nockenflächen 21 und 22 aufweisen. Hierbei ist die Nockenfläche 21 zugeordnet dem Stößel 12 und die Nockenfläche 22 zugeordnet dem Stößel 13 vorgesehen.

Dargestellt ist eine Ausführungsform, bei welcher der Schaltnocken 8 zweiteilig ausgebildet ist, mit einem ersten Teilnocken 23 und einem zweiten Teilnocken 24. Die beiden Teilnocken 23 und 24 liegen, im Wesentlichen scheibenartig ausgebildet, in Erstreckungsrichtung der Betätigungsachse b nebeneinander, wobei der Teilnocken 23 umfangsmäßig die Nockenfläche 21 und der Teilnocken 24 die Nockenfläche 22 aufweist.

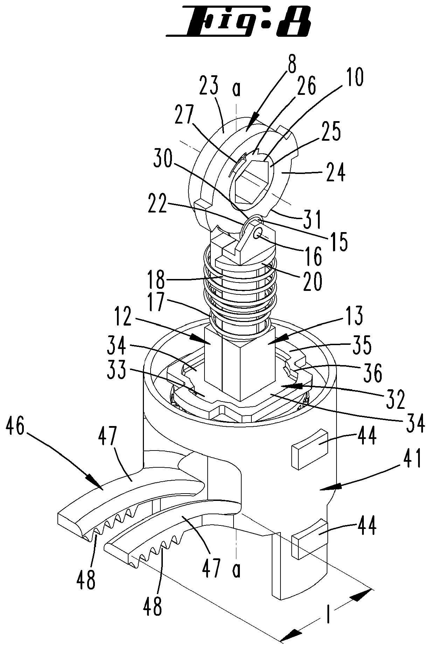

Der zweite Teilnocken 24 ist anschlagbegrenzt über einen vorgegebenen Drehwinkel drehbar an dem ersten Teilnocken 23 gehalten. Hierzu durchsetzt der erste Teilnocken 23 den zweiten Teilnocken 24 in Richtung der Betätigungsachse b mit einem zentralen, zugleich die Kupplungsöffnung 10 aufweisenden Dorn 25 (siehe bspw. Figur 8).

Dieser Dorn 25 ist - bezogen auf seine Umfangsfläche - im Grundriss im Wesentlichen kreisförmig gestaltet. Von dieser Kreisumfangsfläche nach radial außen ragt eine Anschlagrippe 26 ab.

Die von dem Dorn 25 durchsetzte Öffnung des zweiten Teilnocken 24 ist durchmesserangepasst kreisrund gebildet. Über einen Winkel α von etwa 60° ist ein gegenüber der zentralen Öffnung radial erweiterter Freischnitt 27 vorgesehen, in welchen die Anschlagrippe 26 des ersten Teilnockens 23 eintaucht. Es ergibt sich zufolge der umfangsmäßigen Erstreckung der Anschlagrippe 26 ein in Umfangsrichtung betrachteter Freilauf des ersten Teilnockens 23 gegenüber dem zweiten Teilnocken 24 über einen Winkel von etwa 30°.

Der formschlüssig mit dem Schaltnocken 8, bei zweiteiliger Ausbildung mit dem ersten Teilnocken 23, verbundene Schalthebel 11 wirkt zufolge der vorbeschriebenen Ausgestaltung bei Drehbetätigung desselben um die Betätigungsachse b unmittelbar auf den ersten Teilnocken 23 und nur mittelbar über den ersten Teilnocken 23 auf den zweiten Teilnocken 24.

Die Nockenfläche 21 des ersten Teilnocken 23 weist im Grundriss, in welchem Grundriss sich die Betätigungsachse b als Punkt abzeichnet, zunächst eine Radialvertiefung 28 auf, deren Kontur im Wesentlichen angepasst ist an die Umfangsfläche des Außenringes des zugewandten Wälzlagers 15 für den Stößel 12.

Die Radialvertiefung 28 geht in Umfangsrichtung betrachtet einer Ends über in die konturmäßig unbeeinflusste Kreisumfangsfläche des Teilnockens 23. Anderen Ends geht die Radialvertiefung 28 über in eine Nockenteilfläche, die sich etwa über 45° in Umfangsrichtung auf einem Radialmaß erstreckt, welches etwa einen Mittelwert zwischen dem kleinsten Radialmaß der Radialvertiefung 28 und dem Radialmaß der kreisförmigen, konturmäßig unbeeinflussten Umfangsfläche des Teilnockens 23 entspricht. Die vorbezeichneten Radialmaße sind jeweils bezogen auf die Betätigungsachse b.

Auch der zweite Teilnocken 24 weist angepasst an das Wälzlager 15 des Stößels 13 eine Radialvertiefung 30 auf. Auch diese geht einer Ends unmittelbar in die kreisförmige Umfangsfläche des zweiten Teilnockens 24 über und anderen Ends in die entgegengesetzte Umfangsrichtung über in einen radialstufenartigen Flächenabschnitt 31, welcher sich etwa über einen Winkel von etwa 15° erstreckt. Dieser Flächenabschnitt 31 weist ein Radialerstreckungsmaß - bezogen auf die Betätigungsachse b - auf, welches etwa 9/10 des Umfangsmaßes des zweiten Teilnockens 24 im Bereich der kreisabschnittförmigen Umfangsfläche entspricht. Weiter ist der Flächenabschnitt 31 - betrachtet von dem Stößel 13 aus - konvex gewölbt.

Mit Bezug auf eine Projektion des ersten Teilnockens 23 auf den zweiten Teilnocken 24 (beispielsweise Figur 5) ergibt sich - ausgehend von der jeweiligen Radialvertiefung 28 bzw. 30 - ein Anschluss des jeweiligen Flächenabschnittes 29 bzw. 31 in derselben Umfangsrichtung.

Die Stößel 12 und 13 erstrecken sich unter Durchsetzung des Stößelganges 14 in Richtung auf das Laufrad 6 gesehen weiter in die Gabelhöhlung 5. Hier trägt der Stößel 12 im Bereich seines in die Gabelhöhlung 5 eingreifenden Endes einen Rastteller 32. Dieser erstreckt sich in einer quer gerichteten Ebene zur Schwenkachse a.

Der Rastteller 32 weist mit Bezug auf einen Grundriss des Rasttellers 32 kreuzförmig zueinander angeordnete Vorsprünge 33 und 34 auf, wobei die sich gegenüberliegenden Vorsprünge 33 eine quer zu einer Radiallinie betrachtete Breite aufweisen, die etwa dem entsprechenden halben Breitenmaß der im Grundriss um 90° zu den Vorsprüngen 33 versetzt angeordneten Vorsprüngen 34 entspricht.

Der Rastteller 32 dient zur Zusammenwirkung mit einem Feststellungsteil 35, welches in der Gabel 2 befestigt ist. Das Feststellungsteil 35 weist eine Formschlussausnehmung 36 auf, die grundrissmäßig der umlaufenden Außenkontur des Feststellungsteils 35 angepasst ist.

In einer Grundstellung (Freilaufstellung) erstreckt sich der Rastteller 32 unterhalb der Formschlussausnehmung 36 des Feststellungsteils 35 (vgl. Figur 5).

Der Rastteller 32 ist durchsetzt von dem weiteren Stößel 13, der im Bereich seines freien Endes unterhalb des Rasttellers 32 einen angeformten Feststellteller 37 trägt. Der Feststellteller 37 ist unterseitig, entsprechend abgewandt dem Schaltnocken 8, mit einer Verzahnung 38 versehen, gebildet durch im Wesentlichen radial (bezogen auf die Schwenkachse a) ausgerichtete Stege.

Ein auf der Verzahnungsseite zentral in Richtung der Schwenkachse a abragender, in Richtung auf das Laufrad 6 weisender Zapfen 39 taucht in eine entsprechend angepasste Bohrung 40 eines ersten Bremsteils 41. Dieses erste Bremsteil 41 ist im Wesentlichen in der Gabel 2 geführt und kann relativ zu der Gabel 2 entlang der Schwenkachse a verlagert werden. Die dem Laufrad 6 zugewandte Reibschlussfläche 42 verläuft in einem Vertikalschnitt gemäß Figur 5 gekrümmt, bevorzugt mit einem Krümmungsradius angepasst an den Radius der umlaufenden Laufradfläche.

Zugewandt dem gabelseitigen Feststellungsteil 35 bildet das erste Bremsteil 41 einen den Stößel 13 umgebenden Hohlraum aus. In diesem erstreckt sich der Feststellteller 37.

Bodenseitig der Höhlung ist zugewandt dem Feststellteller 37 eine an die Verzahnung 38 angepasste Gegenverzahnung 43 ausgebildet.

Wie das Feststellungsteil 35 ist auch das erste Bremsteil 41 drehfest in der Gabel 2 gehalten.

Wie insbesondere aus den Darstellungen in den Figuren 7 und 8 zu erkennen, sind wandungsaußenseitig des ersten Bremsteils 41 Führungsvorsprünge 44 vorgesehen, die zur drehfesten, aber schiebebeweglichen Verlagerbarkeit des ersten Bremsteils 41 in der Gabel 2 in langlochartige Fenster 45 im Bereich der Gabelschenkel 4 tauchen.

Weiter kann das erste Bremsteil 41, wie auch bevorzugt, durch eine nicht dargestellte Feder, bspw. Haarnadelfeder, in ihre Grundstellung nach vertikal oben belastet sein, in welcher Grundstellung sich das erste Bremsteil 41 an dem gabelseitigen Feststellungsteil 35 abstützen kann.

Wie zudem aus den Darstellungen in den Figuren 7 und 8 zu entnehmen ist, ist an dem ersten Bremsteil 41 ein weiteres, ein zweites Bremsteil 46 angeformt. In dem dargestellten Ausführungsbeispiel besteht das zweite Bremsteil 46 aus zwei an dem ersten Bremsteil 41 angeformten Armen 47, die - ausgehend von dem ersten Bremsteil 41 - freikragend abragen. Alternativ kann auch nur ein Arm 47 vorgesehen sein.

Die Arme 47 erstrecken sich mit Bezug auf eine Seitenansicht, in welcher die Schwenkachse a sich als Linie abbildet, auf einer Radiuslinie bezogen auf die Radachse c.

Unterseitig, d.h. radial innen bezüglich der Laufradachse der Arme 47 sind Formschlussmittels 48 in Form einer Verzahnung vorgesehen. Diese dienen zur formschlussmäßigen Zusammenwirkung mit jeweils einem Zahnkranz 49. Die beiden Zahnkränze 49 sind beidseitig der Radfelge an dem Laufrad 6 ausgebildet.

Die freie Abraglänge 1 der Arme 47 von deren Anbindung an dem ersten Bremsteil 41 bis zu dem dem Anbindungsbereich abgewandten Ende entspricht in dem dargestellten Ausführungsbeispiel etwa einem Zehntel der Länge einer die Spitzen der Zähne des Zahnkranzes 49 verbindenden Umfangslinie.

Die Anordnung ist weiter bevorzugt so gewählt, dass die Formschlussmittel 48 der Arme 47 im Nutzungszustand der Lenkrolle 1 zugeordnet einem Zenit des Zahnkranzes 49 vorgesehen sind.

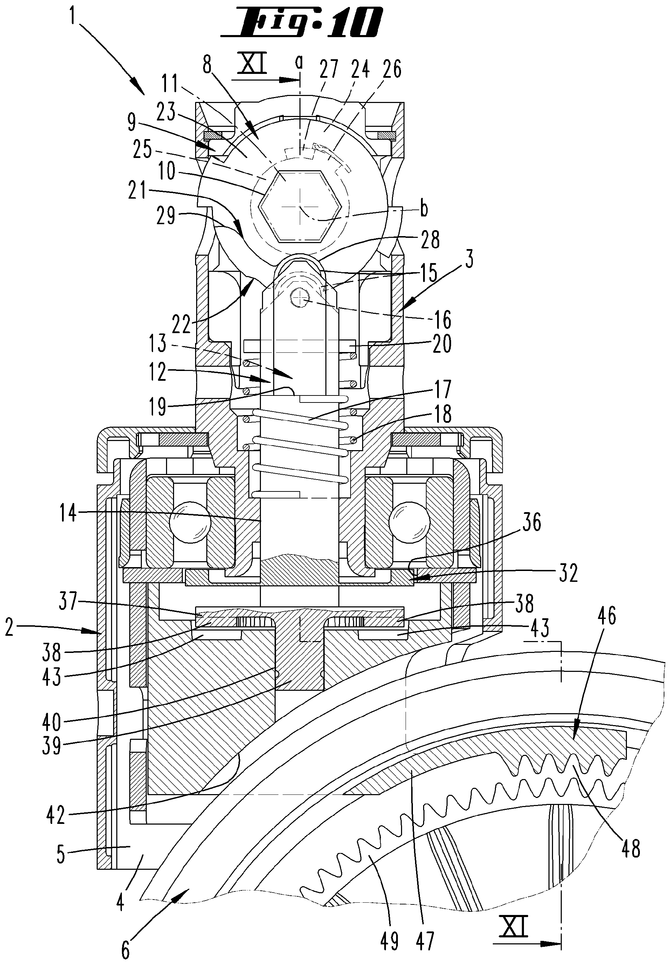

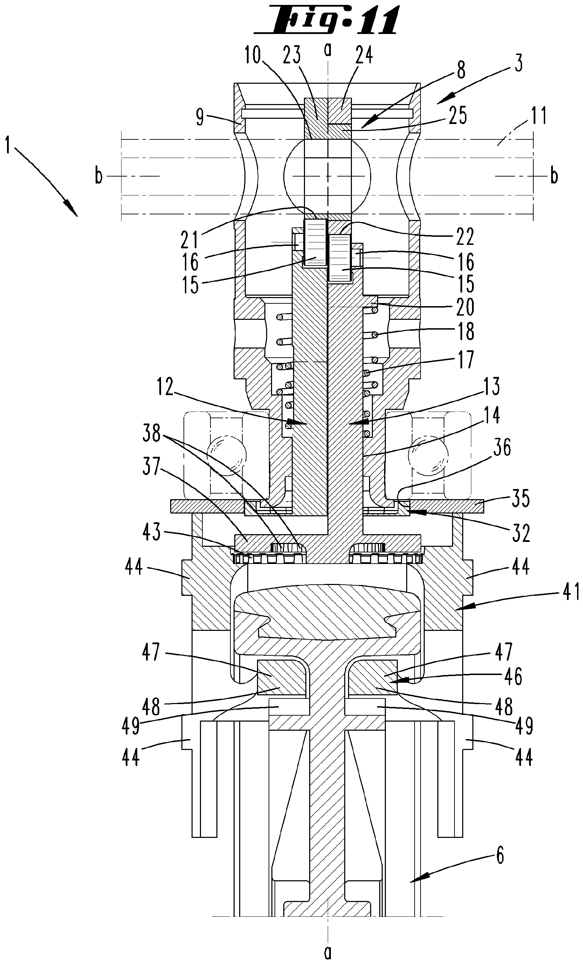

Die Figuren 10 und 11 zeigen die Lenkrolle 1 in einer sogenannten Bockrollenstellung, in welcher allein die Lenkfunktion außer Kraft gesetzt ist.

Der Schaltnocken 8 und somit die Teilnocken 23 und 24 befinden sich hierbei in einer Drehstellung, in welcher die Stößel 12 und 13 mit ihren Wälzlagern 15 federunterstützt in den jeweiligen Radialvertiefungen 28 und 30 einsitzen. In dieser Stellung sind beide Stößel 12 und 13 in ihrer vertikal obersten Stellung.

Der Feststellteller 37 des Stößels 13 ist in dieser Bockrollenstellung vertikal beabstandet zu der Gegenverzahnung 43 des ersten Bremsteiles 41. Es ergibt sich entsprechend hier kein Eingriff. Darüber hinaus ist das erste Bremsteil 41 in der anschlagbegrenzten Grundstellung gehalten, in welcher keine Bremswirkung erreicht wird.

Ist bspw. die Lenkrolle 1 an einem Krankenhausbett festgelegt, ist die Bockrollenstellung der Rolle 1 für einen erleichterten geradeaus gerichteten Schiebevorgang des Bettes bspw. als Grundstellung anzusehen. In dieser Bockrollenstellung liegen die Vorsprünge 33 und 34 des Stößels 12 drehsperrend in der Formschlussausnehmung 36 des Feststellungsteiles 35 ein, dies unter Federvorspannung der Rückstellfeder 17.

Die Bockrollenstellung kann durch den Benutzer zufolge entsprechender Drehung des Schaltnockens 8 über den Schalthebel 11 auch dann eingestellt werden, wenn das Laufrad 6 nicht in einer die Verrastung zwischen Rastteller 32 und Feststellungsteil 35 erlaubenden Richtung ausgerichtet ist. Der für die Festlegung der Lenkfunktion zuständige Stößel 12 liegt dann über dessen Rastteller 32 mittels Federvorspannung der Rückstellfeder 17 unterseitig an dem Feststellungsteil 35 an bzw. gleitet bei Lenkbetätigung der Lenkrolle 1 aufgrund der Federvorspannung an diesem entlang, bis die Vorsprünge 33 und 34 mit der Formschlussausnehmung 36 deckungsgleich zueinander ausgerichtet sind und durch die Federvorspannung verrastend zusammenwirken. Dies ermöglicht beim Ausführungsbeispiel eine annähernd 180°-Drehung des Laufrades 6 um die Schwenkachse a bis zur Erreichung der Bockrollenstellung.

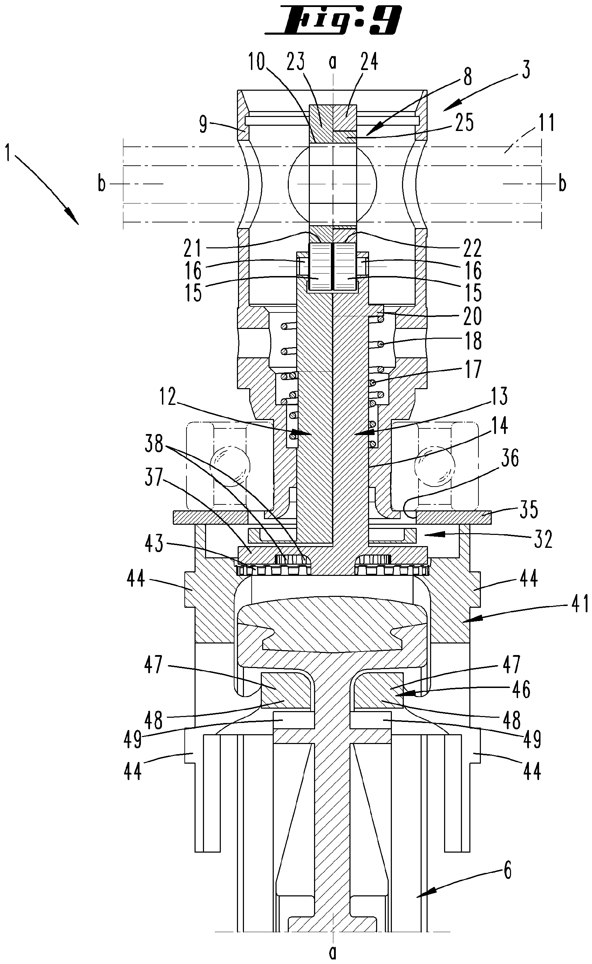

Aus dieser Bockrollenstellung heraus kann durch Drehverlagerung des Schaltnockens 8, so weiter insbesondere zunächst allein des Teilnockens 23 relativ zu dem Teilnocken 24, die Freilaufstellung gemäß den Figuren 5 bis 9 erreicht werden (Drehrichtung d). Der Teilnocken 24 verbleibt entsprechend in seiner Bockrollenstellung. Der diesbezügliche Stößel 13 wird nicht verlagert.

Vielmehr wird aus der Bockrollenstellung heraus in die Freilaufstellung allein nur der Stößel 12 verlagert, wie auch bei einer Verlagerung aus der Freilaufstellung zurück in die Bockrollenstellung.

Durch die Drehverlagerung des Teilnockens 23 wird das Wälzlager 15 des zugeordneten Stößels 12 aus der Radialvertiefung 28 heraus zwangsverlagert in eine Abstützstellung, in welcher sich das Wälzlager 15 des Stößels 12 auf dem Flächenabschnitt 29 abstützt. Der Stößel 12 und somit der hieran befestigte Rastteller 32 sind über das radiale Differenzmaß u im Bereich der Nockenfläche 21 nach vertikal unten verlagert, so dass der Rastteller 32 außer Eingriff gebracht wird zu dem Feststellungsteil 35.

In dieser Freilaufstellung ist das Laufrad 6 frei um die Schwenkachse a schwenkbar, wie auch um die Radachse c drehbar.

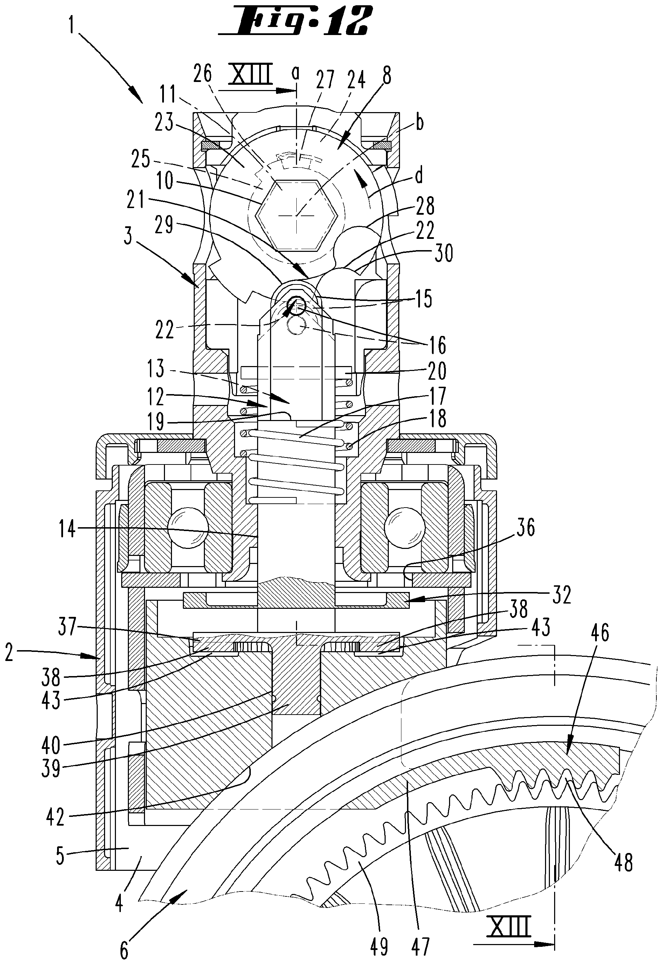

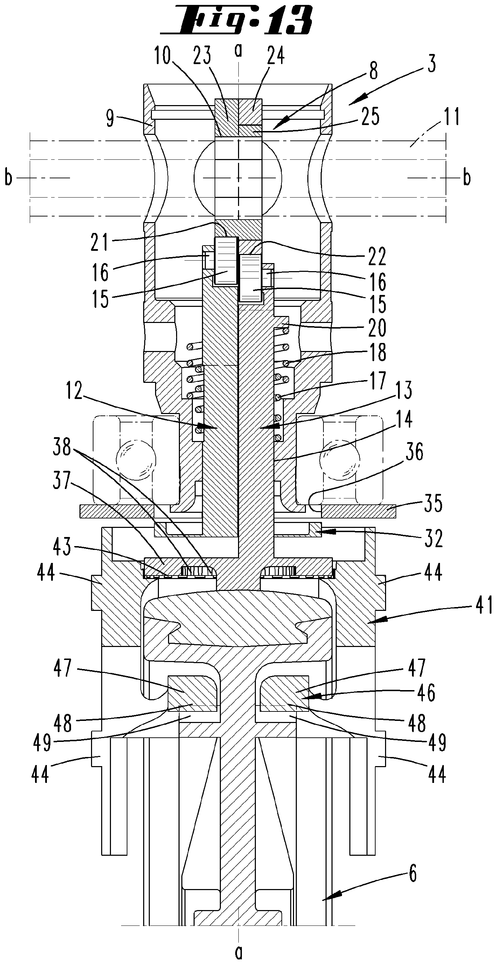

Zur Erlangung einer Totalfeststellung der Lenkrolle 1 bzw. des Laufrades 6, wie dies in den Figuren 12 und 13 dargestellt ist, wird der Schaltnocken 8 bzw. der formschlüssig mit dem Schalthebel 11 verbundene Teilnocken 23 weiter in Drehrichtung d gedreht. Dies führt über eine Zusammenwirkung von Anschlagrippe 26 und Freischnitt 27 zu einer Drehschleppmitnahme des zweiten Teilnockens 24 in eine letztlich bevorzugt anschlagbegrenzte Endstellung.

Im Zuge dieser weiteren Drehverlagerung des Schaltnockens 8 läuft das Wälzlager 15 bzw. dessen Außenring des Stößels 12 entlang des Flächenabschnittes 29 des Teilnockens 23, welcher Flächenabschnitt 29 bevorzugt einem sich auf die Betätigungsachse b beziehenden Kreisabschnitt folgt. Der Stößel 12 erfährt im Zuge dieser weiteren Schwenkverlagerung des Schaltnockens 8 keine weitere Vertikalverlagerung.

Vielmehr wird bei einer Verlagerung aus der Freilaufstellung heraus in die Totalfeststellung - und auch umgekehrt aus der Totalfeststellung in die Freilaufstellung - allein nur der Stößel 13 linear verlagert. Dieser verlässt die zugeordnete Radialvertiefung 30 des Teilnockens 24 und stützt sich nach entsprechender linearer Aussteuerung an dem konvexen Flächenabschnitt 31 ab. Durch die Vertikalverlagerung kommt es zunächst zu einem formschlüssigen Eingriff von feststelltellerseitiger Verzahnung 38 und der Gegenverzahnung 43 des ersten Bremsteils 41 und zu einer anschließenden Schlepp-Mitverlagerung des ersten Bremsteiles 41 nach vertikal unten bis in eine Stellung, in welcher die Reibschlussfläche 42 reibschlüssig einwirkend auf der Lauffläche des Laufrades 6 anliegt.

Zugleich ist auch das zweite Bremsteil 46 über das gleiche Linearmaß wie das erste Bremsteil 41 nach unten verlagert, so dass die Formschlussmittel 48 der bremsteilseitigen Arme 47 in Formschlusseingriff treten können zu den laufradseitigen Zahnkränzen 49.

Durch die freikragende Ausgestaltung der Arme 47 ist eine elastische Anbindung des zweiten Bremsteiles 46 an dem ersten Bremsteil 41 gegeben. Die Arme 47 können bei Blockade elastisch ausweichen. Eine solche Blockade kann erreicht sein in dem Fall, dass die Zahnspitzen der Formschlussmittel 48 bei ungünstiger Radstellung auf Zahnspitzen des Zahnkranzes 49 treffen. Auch in einer solchen Situation ist die Erlangung der Totalfeststellung, in welcher auch eine Bremswirkung erreicht wird, möglich, wenngleich ggf. zunächst nur allein eine Reibschluss-Bremswirkung erreicht werden kann. Eine leichte Bewegung des Laufrades 6 in Laufrichtung reicht hiernach aber aus, um ein selbsttätiges Einfallen der Formschlussmittel 48 in den Zahnkranz 49 zu ermöglichen, dies zufolge der elastischen Rückstellfähigkeit der Arme 47.

Während die Schwenkfeststellung in der Bockrollenstellung in der gezeigten Ausführungsform nur in zwei um 180° versetzten Laufrichtungen des Laufrades 6 möglich ist, kann eine Feststellung des Laufrades 6 um die Schwenkachse a in der Totalfeststellung in nahezu jeder Schwenkausrichtung des Laufrades 6 erreichbar sein.

Es sind für die beiden möglichen Feststellungen (Bockrollenstellung, Totalfeststellung) zwei unabhängig voneinander verlagerbare Stößel 12, 13 vorgesehen, die jeweils alleine nur die Funktionsteile tragen, die für die jeweilige Funktion notwendig sind. Dies führt zu einer signifikanten Verringerung der Schaltkräfte, wie auch zur Erlangung der Bremswirkung im Vergleich zum bekannten Stand der Technik geringere Kräfte aufgebracht werden müssen durch die bevorzugte Kombination aus Reibschluss- und Formschluss-Bremseinrichtung.

**Liste der Bezugszeichen**

| | | | |
|---|---|---|---|
| 1 | Lenkrolle | 29 | Flächenabschnitt |
| 2 | Gabel | 30 | Radialvertiefung |
| 3 | Montagezapfen | 31 | Flächenabschnitt |
| 4 | Gabelschenkel | 32 | Rastteller |
| 5 | Gabelhöhlung | 33 | Vorsprung |
| 6 | Laufrad | 34 | Vorsprung |
| 7 | Hohlachse | 35 | Feststellungsteil |
| 8 | Schaltnocken | 36 | Formschlussausnehmung |
| 9 | Befestigungshülse | 37 | Feststellteller |
| 10 | Kupplungsöffnung | 38 | Verzahnung |
| 11 | Schalthebel | 39 | Zapfen |
| 12 | Stößel | 40 | Bohrung |
| 13 | Stößel | 41 | erstes Bremsteil |
| 14 | Stößelgang | 42 | Reibschlussfläche |
| 15 | Wälzlager | 43 | Gegenverzahnung |
| 16 | Zapfen | 44 | Führungsvorsprung |
| 17 | Rückstellfeder | 45 | Fenster |
| 18 | Rückstellfeder | 46 | zweites Bremsteil |
| 19 | Ringschulter | 47 | Arm |
| 20 | Kragen | 48 | Formschlussmittel |
| 21 | Nockenfläche | 49 | Zahnkranz |
| 22 | Nockenfläche | | |
| 23 | Teilnocken | | |
| 24 | Teilnocken | a | Schwenkachse |
| 25 | Dorn | b | Betätigungsachse |
| 26 | Anschlagrippe | c | Radachse |
| 27 | Freischnitt | d | Drehrichtung |
| 28 | Radialvertiefung | 1 | Länge |
| u | Maß | | |
| | | | |
| α | Winkel | | |

## Patentansprüche

1. Lenkrolle (1) mit einem Laufrad (6), einer Gabel (2) und einem Montagezapfen (3), wobei die Gabel (2) relativ zu dem Montagezapfen (3) verschwenkbar ist und in der Gabel (2) eine Bremseinrichtung angeordnet ist, die durch einen über einen Schaltnocken (8) betätigten Stößel (13) in die Bremsstellung verlagerbar ist, wobei weiter eine Richtungsfeststellung ohne Bremseinwirkung auf das Laufrad (6) einstellbar ist, und zwei Stößel (12,13) vorgesehen sind, die unabhängig voneinander bewegbar sind, wobei über einen der Stößel (12) nur die Richtungsfeststellung ohne Bremseinwirkung einstellbar ist, **dadurch gekennzeichnet, dass** die Stößel (12,13) bei einer üblichen Benutzungsstellung der Lenkrolle (1) quer zu einer Vertikalrichtung nebeneinander angeordnet sind und sich nebeneinander in Vertikalrichtung erstrecken, dass der Schaltnocken (8) zwei Nockenflächen (21, 22) aufweist, die jeweils einem der Stößel (12,13) zugeordnet sind und dass die Nockenflächen (21, 22) unterschiedlich zueinander ausgebildet sind.

2. Lenkrolle nach Anspruch 1, **dadurch gekennzeichnet, dass** einer der Stößel (12, 13) mit einem Bremsteil zusammenwirkt.

3. Lenkrolle nach Anspruch 2, **dadurch gekennzeichnet, dass** das Bremsteil aus einem ersten Reibschluss-Bremsteil (41) und einem zweiten Formschluss-Bremsteil (46) besteht.

4. Lenkrolle nach Anspruch 1 oder 3, **dadurch gekennzeichnet, dass** der Schaltnocken (8) zweiteilig ausgebildet ist, mit einem ersten und einem zweiten Teilnocken (23, 24).

5. Lenkrolle nach einem der vorhergehenden Ansprüche, **dadurch gekennzeichnet, dass** der Schaltnocken (8) auf einen oder beide Stößel (12,13) mittels eines Wälzlagers (15) einwirkt.

6. Lenkrolle nach Anspruch 5, **dadurch gekennzeichnet, dass** ein oder beide Wälzlager (15) an einem oder je einem der Stößel (12,13) gelagert sind.

7. Lenkrolle nach einem der Ansprüche 4 bis 6, **dadurch gekennzeichnet, dass** der erste Teilnocken (23) den zweiten Teilnocken (24) in einer Richtung quer zu der Vertikalrichtung durchsetzt.

8. Lenkrolle nach einem der vorhergehenden Ansprüche, **dadurch gekennzeichnet, dass** der Schaltnocken (8) von einem Schalthebel (11) durchsetzt ist, der im Falle der Teilnocken (23, 24) nur auf einen der Teilnocken (23) unmittelbar einwirkt.

9. Lenkrolle nach einem der Ansprüche 4 bis 8, **dadurch gekennzeichnet, dass** der erste Teilnocken (23) relativ zu dem zweiten Teilnocken (24) um eine Drehachse (b), um welche der Schaltnocken (8) bei Betätigung zu drehen ist, drehbar ist.

10. Lenkrolle nach einem der Ansprüche 4 bis 9 wenn abhängig von Anspruch 3, **dadurch gekennzeichnet, dass** das erste Reibschluss-Bremsteil (41) und das zweite Formschluss-Bremsteil (46) fest miteinander verbunden ausgebildet sind.

11. Lenkrolle nach einem der vorhergehenden Ansprüche, **dadurch gekennzeichnet, dass** das Laufrad (6) einen Zahnkranz (49) aufweist.

12. Lenkrolle nach Anspruch 11, **dadurch gekennzeichnet, dass** der Zahnkranz (49) zur Zusammenwirkung mit dem zweiten Formschluss-Bremsteil (46) vorgesehen ist.

13. Lenkrolle nach einem der Ansprüche 3 bis 12, **dadurch gekennzeichnet, dass** Formschlussmittel (48) des zweiten Formschluss-Bremsteils (46) an einem bevorzugt mit dem ersten Bremsteil (41) zwar fest verbundenen aber elastisch dazu bewegbaren Teil befestigt sind.

14. Lenkrolle nach einem der Ansprüche 3 bis 13, **dadurch gekennzeichnet, dass** das zweite Formschluss-Bremsteil (46) an einem in Umfangsrichtung des Laufrades (6) von dem ersten Bremsteil (41) vorkragenden Arm (47) ausgebildet ist.

## Claims

1. A caster (1) comprising a running wheel (6), a fork (2) and an assembly journal (3), wherein the fork (2) is pivotable relative to the assembly journal (3) and a braking device is arranged in the fork (2) which can be displaced into the braking position via a tappet (13) actuated by a trip cam (8), wherein furthermore a direction lock can be set without a braking action on the running wheel (6), and two tappets (12, 13) are provided which are movable independently of each other, wherein only the direction lock without braking action can be set via one of the tappets (12), **characterized in that** in the normal operating position of caster (1), the tappets (12, 13) are arranged next to one another transverse to a vertical direction and extend next to one another in the vertical direction, the trip cam (8) has two cam surfaces (21, 22) which are each assigned to one of the tappets (12, 13) and the cam surfaces (21, 22) are designed differently from one another.

2. The caster according to claim 1, **characterized in that** one of the tappets (13) interacts with a braking part.

3. The caster according to claim 2, **characterized in that** the braking part comprises a first frictional engagement braking part (41) and a second interlocking lock braking part (46).

4. The caster according to claim 1 or 3, **characterized in that** the trip cam (8) is designed in two parts, with one first and one second partial cam (23, 24).

5. The caster according to one of the preceding claims, **characterized in that** the trip cam (8) acts on one or both tappets (12, 13) by means of a roller bearing (15).

6. The caster according to claim 5, **characterized in that** one or both roller bearings (15) are mounted on one or each on one of the tappets (12, 13).

7. The caster according to one of claims 4 to 6, **characterized in that** the first partial cam (23) penetrates the second partial cam (24) in a direction transverse to the vertical direction.

8. The caster according to one of the preceding claims, **characterized in that** the trip cam (8) is penetrated by a switching lever (11), which, in the case of the partial cams (23, 24), only acts directly on one of the partial cams (23).

9. The caster according to one of claims 4 to 8, **characterized in that** the first partial cam (23) is rotatable relative to the second partial cam (24) about an axis of rotation (b), about which the trip cam (8) is to be rotated during actuation.

10. The caster according to one of the claims 3 to 9, **characterized in that** the first frictional engagement braking part (41) and the second interlocking lock braking part (46) are designed fixedly connected to one another.

11. The caster according to one of the preceding claims, **characterized in that** the running wheel (6) has a sprocket (49).

12. The caser according to claim 11, **characterized in that** the sprocket (49) is intended for interaction with the second interlocking lock braking part (46).

13. The caster according to one of the claims 3 to 12, **characterized in that** interlocking means (48) of the second braking part (46) are indeed fixed on a part preferably rigidly connected to the first braking part (41) yet also elastically movable with respect thereto.

14. The caster according to one of claims 3 to 13, **characterized in that** the second interlocking lock braking part (46) is designed on an arm (47) projecting from the first braking part (41) in the circumferential direction of the running wheel (6).

## Revendications

1. Roulette (1) avec une roue de roulement (6), une fourche (2) et un axe de montage (3), dans laquelle la fourche (2) peut pivoter par rapport à l'axe de montage (3) et un dispositif de freinage est agencé dans la fourche (2), qui peut être déplacé en position de freinage par un poussoir (13) actionné par une came de commande (8), dans laquelle en outre un blocage de direction peut être réglé sans action de freinage sur la roue (6), et deux poussoirs (12, 13) sont prévus qui peuvent être déplacés indépendamment l'un de l'autre, dans laquelle seul le blocage de direction sans effet de freinage peut être réglé par l'intermédiaire d'un des poussoirs (12), **caractérisée en ce que**, dans une position normale d'utilisation de la roulette (1), les poussoirs (12, 13) sont agencés l'un à côté de l'autre transversalement à une direction verticale et s'étendent l'un à côté de l'autre dans la direction verticale, **en ce que** la came de déclenchement (8) présente deux surfaces de came (21, 22) qui sont associées chacune à l'un des poussoirs (12, 13), et **en ce que** les surfaces de came (21, 22) sont réalisées différemment l'une de l'autre.

2. Roulette selon la revendication 1, **caractérisée en ce que** l'un des poussoirs (12, 13) coopère avec une partie de freinage.

3. Roulette selon la revendication 2, **caractérisée en ce que** la partie de freinage est constituée d'une première partie de freinage à engagement à friction (41) et d'une deuxième partie de freinage à engagement positif (46).

4. Roulette selon la revendication 1 ou 3, **caractérisée en ce que** la came de commande (8) est formée en deux parties, avec une première et une deuxième came partielle (23, 24).

5. Roulette selon l'une des revendications précédentes, **caractérisée en ce que** la came de commande (8) agit sur un ou les deux poussoirs (12, 13) au moyen d'un roulement à rouleaux (15).

6. Roulette selon la revendication 5, **caractérisée en ce qu'**un ou les deux roulements à rouleaux (15) sont montés sur un ou les deux poussoirs (12, 13).

7. Roulette selon l'une quelconque des revendications 4 à 6, **caractérisée en ce que** la première came partielle (23) passe à travers la deuxième came partielle (24) dans une direction transversale à la direction verticale.

8. Roulette pivotante selon l'une des revendications précédentes, **caractérisée en ce que** la came de commande (8) est traversée par un levier de commande (11) qui, dans le cas des cames partielles (23, 24), agit directement sur une seule des cames partielles (23).

9. Roulette selon l'une des revendications 4 à 8, **caractérisée en ce que** la première came partielle (23) peut tourner par rapport à la deuxième came partielle (24) autour d'un axe de rotation (b) autour duquel la came de commande (8) doit être tournée lors de l'actionnement.

10. Roulette selon l'une des revendications 3 à 9, **caractérisée en ce que** la première partie de freinage à friction (41) et la deuxième partie de freinage à engagement positif (46) sont formées de manière à être reliées fixement l'une à l'autre.

11. Roulette selon l'une des revendications précédentes, **caractérisée en ce que** la roue de roulement (6) présente une couronne dentée (49).

12. Roulette selon la revendication 11, **caractérisée en ce que** la couronne dentée (49) est prévue pour coopérer avec la deuxième partie de freinage à engagement positif (46).

13. Roulette selon l'une quelconque des revendications 3 à 12, **caractérisée en ce que** des moyens d'engagement positif (48) de la deuxième partie de freinage à engagement positif (46) sont fixés sur une pièce qui est de préférence reliée de manière fixe à la première partie de freinage (41) mais qui est mobile de manière élastique par rapport à celle-ci.

14. Roulette selon l'une des revendications 3 à 13, **caractérisée en ce que** la deuxième partie de freinage à engagement positif (46) est formée sur un bras (47) faisant saillie de la première partie de freinage (41) dans la direction circonférentielle.
